# EUROPÄISCHE PATENTANMELDUNG

(11) **EP 4 703 236 A1**
(43) Veröffentlichungstag der Anmeldung: **04.03.2026**
(21) Anmeldenummer: 25194013.6
(22) Anmeldetag: 05.08.2025
(51) Int. Cl.: B62B 3/14, B62B 5/06

(54) **STAPELBARER EINKAUFSWAGEN MIT ÜBERDREHSCHUTZ SOWIE GRIFFSTÜCK FÜR EINEN DERARTIGEN STAPELBAREN EINKAUFSWAGEN**

(30) Priorität: 02.09.2024 DE 102024125040
(71) Anmelder: Wanzl GmbH & Co. KGaA, 89340 Leipheim (DE)
(72) Erfinder: Daminger, Johann, 89223 Neu-Ulm, Burlafingen (DE)

(57) **Zusammenfassung**

Die vorliegende Erfindung betrifft ein Griffstück (18) für einen stapelbaren Einkaufswagen (10) mit einem Korb (12) mit klappbarer Heckseitenwand (14), insbesondere mit Kindersitz (16), wobei das Griffstück (18) einen Griffabschnitt (20), einen Handschutz (22), eine Ausnehmung zum Aufsatz auf ein Gegenstück am Einkaufswagen (10) und eine Überdrehschutzvorsprung (26) aufweist, wobei der Überdrehschutzvorsprung (26) benachbart zur Ausnehmung (24) angeordnet ist und im montierten Zustand des Griffstücks (18) wagenseitig nach innen gerichtet ist und jedenfalls die gedachte verlängerte Außenkante (K) des Korbes (12) überragt.

Des Weiteren betrifft die vorliegende Erfindung einen stapelbaren Einkaufswagen (10) mit einem Korb (12) mit klappbarer Heckseitenwand (14), insbesondere mit Kindersitz (16), mit wenigstens einem derartigen Griffstück (18).

## Beschreibung

Die vorliegende Erfindung betrifft ein Griffstück für einen stapelbaren Einkaufswagen mit einem Korb mit klappbarer Heckseitenwand, insbesondere mit Kindersitz, sowie einen stapelbaren Einkaufswagen mit einem Korb mit klappbarer Heckseitenwand, insbesondere mit Kindersitz, mit wenigstens einem derartigen Griffstück.

Aus dem Stand der Technik sind bereits stapelbare Einkaufswagen mit einem Korb mit klappbarer Heckseitenwand, insbesondere mit Kindersitz, bekannt. Die klappbaren Kindersitze sind dabei zumeist in der Heckseitenwand des Einkaufswagens angeordnet, die für die Stapelbarkeit verschwenkbar sein muss.

Aus der DE 10 2015 013 592 B4 ist ein Einkaufswagen mit heckseitigen Griffstücken ohne quer angeordnete heckseitige Schiebestange bekannt, die durch den Benutzer besonders ergonomisch gegriffen werden kann. Die Griffstücke weisen einen Handschutz auf.

Die EP 0 854 073 A1 und die DE 10 2011 104 321 A1 offenbaren ebenfalls einen Einkaufswagen mit heckseitigen Griffstücken ohne quer angeordnete heckseitige Schiebestange, wobei die Griffstücke nach oben ragen.

Die EP 3 589 530 B1, die EP 3 416 868 B1 und die EP 3 490 872 B1 offenbaren Einkaufswagen mit heckseitigen Griffstücken mit quer angeordnete heckseitige Schiebestange, wobei die Griffstücke nach oben ragen.

Kindersitzklappen sind beispielsweise aus der EP3533684 B1 und der EP2644472 B1 als Kunststoffausführung oder als Draht-Klappe aus der EP1562816 B1 bekannt.

Um die Sicherheit für die Benutzer des Einkaufswagens zu erhöhen, wäre es wünschenswert, die Bewegbarkeit der Heckseitenwand des Einkaufswagens derart zu beschränken, dass ein Einklemmen der Hände des Benutzers des Einkaufswagens vermieden bzw. ausgeschlossen werden kann.

Es ist daher die Aufgabe der vorliegenden Erfindung, ein Griffstück für einen stapelbaren Einkaufswagen sowie einen stapelbaren Einkaufswagen der eingangs genannten Art in vorteilhafter Weise weiterzubilden, insbesondere dahingehend, dass die Betriebssicherheit des Einkaufswagens erhöht werden kann.

Diese Aufgabe wird erfindungsgemäß gelöst durch ein Griffstück für einen stapelbaren Einkaufswagen mit den Merkmalen des Anspruchs 1. Danach ist vorgesehen, dass ein Griffstück für einen stapelbaren Einkaufswagen mit einem Korb mit klappbarer Heckseitenwand, insbesondere mit Kindersitz, bereitgestellt wird, wobei das Griffstück einen Griffabschnitt, einen Handschutz, eine Ausnehmung zum Aufsatz auf ein Gegenstück am Einkaufswagen und eine Überdrehschutzvorsprung aufweist, wobei der Überdrehschutzvorsprung benachbart zur Ausnehmung angeordnet ist und im montierten Zustand des Griffstücks wagenseitig nach innen gerichtet ist und jedenfalls die gedachte verlängerte Außenkante des Korbes überragt.

Die Erfindung basiert auf dem Grundgedanken, dass durch das Griffstück ein Überdrehschutz für die Heckseitenwand mit dem Kindersitz des Einkaufswagens bereitgestellt wird. Durch den Überdrehschutz wird bewirkt, dass die Heckseitenwand und damit ggf. auch der Kindersitz in der Heckseitenwand nur in einem gewissen Winkelbereich verschwenkt werden kann. Beispielsweise kann so beim Stapeln des Einkaufswagens ein Überschlagen der Heckseitenwand wirksam verhindert werden. Der Verschwenkungsbereich der Heckseitenwand wird somit durch den Überdrehschutz verhindert. Der Überdrehschutz wird hier einfach durch einen Überdrehschutzvorsprung im Griffstück realisiert. Eine komplexe Konstruktion oder Anpassung am Korb des Einkaufswagens ist somit nicht erforderlich. Außerdem kann das Griffstück ggf. einfach und auch kostengünstig ausgetauscht werden. Auch ein Nachrüsten bestehender Einkaufswagen ist möglich. Die Konstruktion ermöglicht, dass der Überdrehschutz durch die ggf. fehlende Schiebestange des Schiebegriffs des Einkaufswagens trotzdem bereitgestellt werden kann. Es kann sich also auch um Einkaufswagen handeln, die keine horizontale Stange für den Schiebegriff aufweisen.

Des Weiteren kann vorgesehen sein, dass der Überdrehschutzvorsprung rippenartig ausgebildet ist. Diese Art der Formgebung lässt sich einfach und kostengünstig fertigen. Darüber hinaus ist ermöglicht eine rippenartige Struktur eine vergleichsweise gute Festigkeit bei geringem Materialeinsatz.

Außerdem ist möglich, dass die Überdrehschutzvorsprung im montierten Zustand oberhalb des Griffabschnittes angeordnet ist. Hierdurch wird der Überdrehschutz oberhalb des Griffstücks angeordnet, was zusätzlichen Schutz für die Hand bzw. Hände des Benutzers ermöglicht.

Weiter ist denkbar, dass der Überdrehschutzvorsprung benachbart zur Ausnehmung angeordnet ist. An dieser Stelle kann sehr wirkungsvoll die Bewegungsmöglichkeit der Heckseitenwand eingeschränkt werden, da üblicherweise das Drehgelenk der Heckseitenwand benachbart angeordnet ist.

Griffstück nach einem der vorhergehenden Ansprüche, dadurch gekennzeichnet, dass das Griffstück zumindest teilweise aus Kunststoff ausgebildet ist. Dies ermöglicht eine einfache und kostengünstige Fertigung. Auch die Formgebung wird hierdurch vereinfacht. Des Weiteren wird durch die Materialauswahl Kunststoff sichergestellt, dass das Material des Griffes durch den ständigen Handkontakt und damit u.A. Kontakt mit Schweiß korrosionsbeständiger und langlebiger ist als andere Materialien (wie z.B. Metalle).

Insbesondere ist denkbar, dass das Griffstück einstückig ausgebildet ist. Dies ermöglicht eine einfache und zuverlässige Fertigung. Auch wird es dadurch möglich, hochwertige Oberfläche ohne Kanten und dergleichen zu realisieren.

Außerdem ist denkbar, dass das Griffstück zumindest teilweise als Kunststoffspritzgussteil ausgebildet ist. Dies ermöglicht eine einfache, zuverlässige und hochwertige Fertigung auch in hohen Stückzahlen. Darüber hinaus ist diese Art der Fertigung bei hohen Stückzahlen der kostengünstig bei hoher Fertigungs- und Bauteilqualität.

Darüber hinaus kann vorgesehen sein, dass der Griffabschnitt ergonomisch abgerundet, insbesondere an menschliche Hand angepasst ist. Der Griffabschnitt kann dabei nach unten Richtung Boden hin (bezogen auf den montierten Zustand, dabei Einkaufwagen auf ebener Fläche stehend) zeigen. Der Winkel ist dabei so gewählt, dass es einen verdreharmen Griff des Benutzers ermöglicht. Dies erhöht die Bedienerfreundlichkeit.

Stapelbarer Einkaufswagen mit einem Korb mit klappbarem Kindersitz mit wenigstens einem Griffstück nach einem der vorhergehenden Ansprüche.

Weitere Einzelheiten und Vorteile der Erfindung sollen nun anhand eines in den Figuren näher gezeigten Ausführungsbeispiels beschrieben werden.

Es zeigen:
- **Fig. 1**: eine perspektivische Ansicht auf ein Ausführungsbeispiel eines erfindungsgemäßen Einkaufswagens mit einem Ausführungsbeispiel eines erfindungsgemäßen Griffstücks;
- **Fig. 2**: eine perspektivische Ansicht auf das Griffstück gemäß **Fig. 1****;**
- **Fig. 3**: eine weitere perspektivische Ansicht auf das Griffstück gemäß **Fig. 1** und **Fig. 2****;** und
- **Fig. 4**: eine Seitenansicht auf das Griffstück gemäß **Fig. 1-3****.**

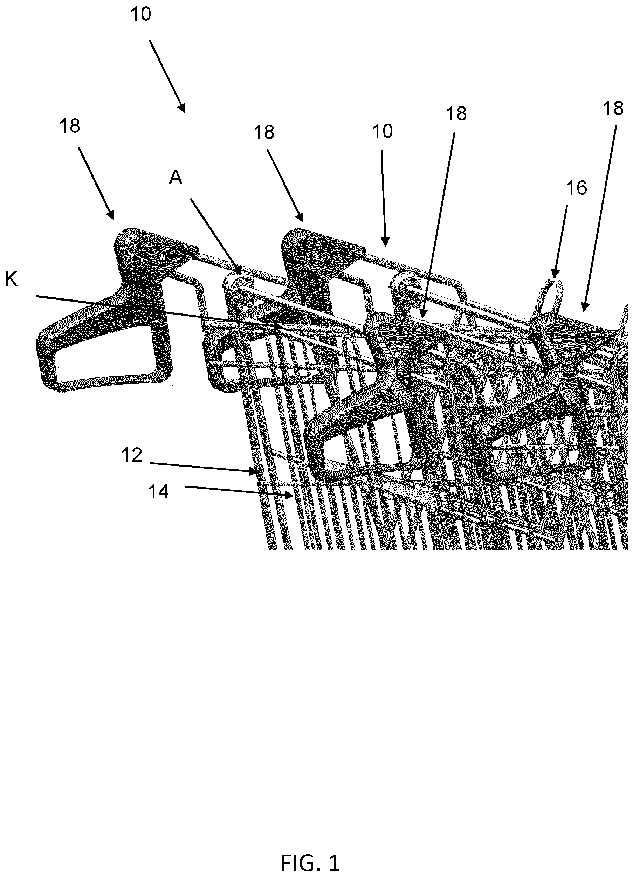

**Fig. 1** zeigt eine Frontansicht eines Ausführungsbeispiels einer erfindungsgemäßen Ausgabevorrichtung 10 für unverpackte Waren, insbesondere Backwaren wie Brot, Brötchen oder dergleichen.

**Fig. 1** ist eine perspektivische Ansicht auf ein Ausführungsbeispiel eines erfindungsgemäßen Einkaufswagens 10.

Der Einkaufswagen 10 ist hier teilweise heckseitig und perspektivisch gezeigt.

Der Einkaufswagen 10 weist einen Korb 12 auf, der hier als Drahtgitterkonstruktion ausgebildet ist.

Der Korb 12 weist heckseitig eine Heckseitenwand 14 auf.

Die Heckseitenwand 14 ist dabei verschwenkbar um Anlenkpunkte A am Korb 12 ausgebildet.

Die Anlenkpunkte A sind heckseitig oben am Korb 12 angeordnet.

An der Heckseitenwand 14 ist ein klappbarer Kindersitz 16 angeordnet.

Der Einkaufswagen 10 ist stapelbar ausgebildet.

An Stelle eines herkömmlichen Schiebegriffs weist der Einkaufswagen 10 zwei Griffstücke 18 auf. Eine horizontale Schiebestange ist nicht vorhanden.

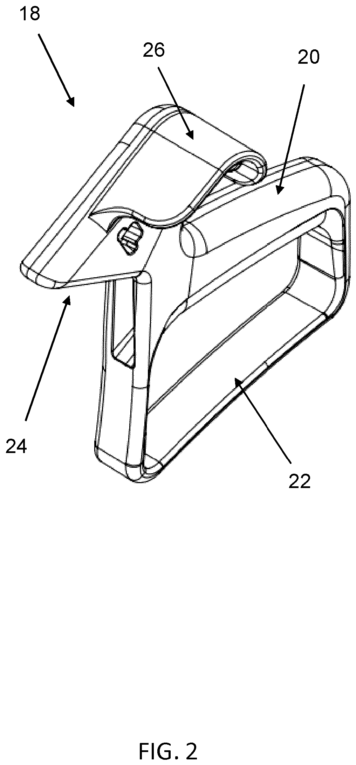

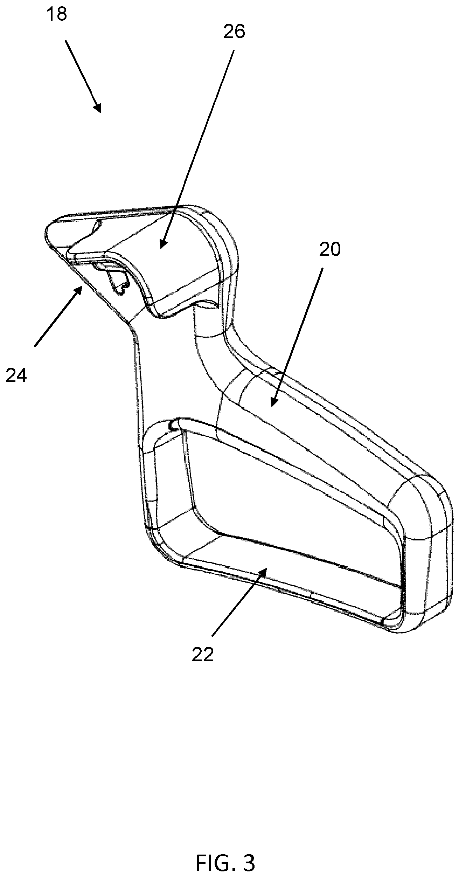

**Fig. 2** und **Fig. 3** zeigen das Griffstück 18 in unterschiedlichen Perspektiven.

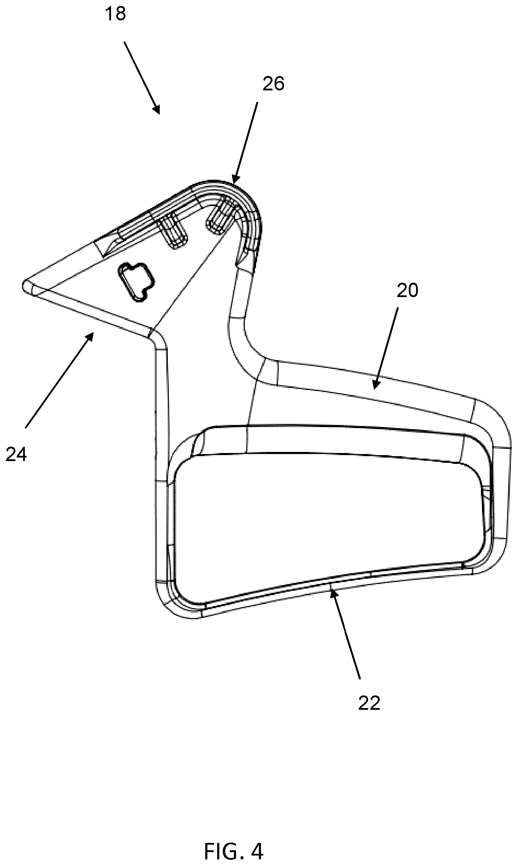

**Fig. 4** zeigt eine Seitenansicht auf das Griffstück gemäß **Fig. 1-3****.**

Für den linken und den rechten Griff unterscheiden sich die Griffstücke 18 nur insoweit, als sie spielverkehrt aufgebaut sind.

Die Griffstücke 18 sind mit Griffabschnitten 20, einem Handschutz 22 und einer Ausnehmung 24 zum Aufsatz auf einem Befestigungsbügel am Korb des Einkaufswagens 10 ausgebildet.

Der Handschutz 22 ist als geschlossener, umlaufender Handschutz 22 ausgebildet.

Außerdem weist jedes Griffstück 18 einen Überdrehschutzvorsprung 26 auf.

Der Überdrehschutzvorsprung 26 ist im gezeigten Ausführungsbeispiel rippenartig ausgebildet.

Außerdem ist vorgesehen, dass der Überdrehschutzvorsprung 26 im montierten Zustand oberhalb des Griffabschnittes 20 und benachbart zur Ausnehmung 24 angeordnet ist.

Im montierten Zustand des Griffstücks 18 ist der Überdrehschutzvorsprung 26 wagenseitig nach innen gerichtet und überragt jedenfalls die gedachte verlängerte Außenkante K des Korbes 12.

Das Griffstück 18 ist im gezeigten Ausführungsbeispiel einstückig als Kunststoffspritzgussteil ausgebildet.

Weiter ist vorgesehen, dass der Griffabschnitt 20 ergonomisch abgerundet und an menschliche Hand angepasst ist.

Die Funktionsweise des Überdrehschutzes lässt sich wie folgt beschreiben:
Durch das Griffstück 18 wird ein Überdrehschutz für die Heckseitenwand 14 mit dem Kindersitz 16 des Einkaufswagens 10 bereitgestellt, der normalerweise durch eine horizontale Stange oder horizontale Elemente eines Schiebegriffes bereitgestellt werden würde. Durch den Überdrehschutz wird bewirkt, dass die Heckseitenwand 14 und damit ggf. auch der Kindersitz 16 in der Heckseitenwand 14 nur in einem gewissen Winkelbereich verschwenkt werden kann. Beispielsweise kann so beim Stapeln des Einkaufswagens ein Überschlagen der Heckseitenwand 14 wirksam verhindert werden. Der Verschwenkungsbereich der Heckseitenwand 14 wird somit durch den Überdrehschutz verhindert. Der Überdrehschutz wird hier einfach durch einen Überdrehschutzvorsprung im Griffstück 18 realisiert. Eine komplexe Konstruktion oder Anpassung am Korb 12 des Einkaufswagens 10 ist somit nicht erforderlich.

### Bezugszeichen

- 10: Einkaufswagen
- 12: Korb
- 14: Heckseitenwand
- 16: Kindersitz
- 18: Griffstück
- 20: Griffabschnitt
- 22: Handschutz
- 24: Ausnehmung
- 26: Überdrehschutzvorsprung

- A: Anlenkpunkt
- K: Außenkante Korb

## Patentansprüche

1. Griffstück (18) für einen stapelbaren Einkaufswagen (10) mit einem Korb (12) mit klappbarer Heckseitenwand (14), insbesondere mit Kindersitz (16), wobei das Griffstück (18) einen Griffabschnitt (20), einen Handschutz (22), eine Ausnehmung (24) zum Aufsatz auf ein Gegenstück am Einkaufswagen (10) und eine Überdrehschutzvorsprung (26) aufweist, wobei der Überdrehschutzvorsprung (26) benachbart zur Ausnehmung (24) angeordnet ist und im montierten Zustand des Griffstücks (18) wagenseitig nach innen gerichtet ist und jedenfalls die gedachte verlängerte Außenkante (K) des Korbes (12) überragt.

2. Griffstück (18) nach Anspruch 1,
**dadurch gekennzeichnet, dass**
der Überdrehschutzvorsprung (26) rippenartig ausgebildet ist.

3. Griffstück (18) nach Anspruch 1 oder Anspruch 2,
**dadurch gekennzeichnet, dass**
der Überdrehschutzvorsprung (26) im montierten Zustand oberhalb des Griffabschnittes (20) angeordnet ist.

4. Griffstück (18) nach einem der vorhergehenden Ansprüche,
**dadurch gekennzeichnet, dass**
der Überdrehschutzvorsprung (26) benachbart zur Ausnehmung (24) angeordnet ist.

5. Griffstück (18) nach einem der vorhergehenden Ansprüche,
**dadurch gekennzeichnet, dass**
dass das Griffstück (18) zumindest teilweise aus Kunststoff ausgebildet ist.

6. Griffstück (18) nach einem der vorhergehenden Ansprüche,
**dadurch gekennzeichnet, dass**
dass das Griffstück (18) einstückig ausgebildet ist.

7. Griffstück (18) nach einem der vorhergehenden Ansprüche,
**dadurch gekennzeichnet, dass**
dass das Griffstück (18) zumindest teilweise als Kunststoffspritzgussteil ausgebildet ist.

8. Griffstück (18) nach einem der vorhergehenden Ansprüche,
**dadurch gekennzeichnet, dass**
der Griffabschnitt (20) ergonomisch abgerundet ist, insbesondere an menschliche Hand angepasst ist.

9. Stapelbarer Einkaufswagen (10) mit einem Korb (12) mit klappbarer Heckseitenwand (14), insbesondere mit Kindersitz (16), mit wenigstens einem Griffstück (18) nach einem der vorhergehenden Ansprüche.
